# EUROPEAN PATENT SPECIFICATION

(11) **EP 3 206 861 B1**
(45) Date of publication and mention of the grant of the patent: **07.08.2024**
(21) Application number: 15850366.4
(22) Date of filing: 15.10.2015
(51) Int. Cl.: B22F 10/14, B22F 5/10, B28B 1/00, B33Y 10/00, B22F 10/28, B33Y 40/20, B33Y 70/00, B29C 64/165, B33Y 50/02

(54) **METHODS FOR CONTROLLING WARPAGE OF CAVITIES OF THREE-DIMENSIONALLY PRINTED ARTICLES DURING HEAT TREATMENT**
VERFAHREN ZUR STEUERUNG DES VERZIEHENS VON HOHLRÄUMEN DREIDIMENSIONAL GEDRUCKTER ARTIKEL BEI DER WÄRMEBEHANDLUNG
PROCÉDÉS PERMETTANT DE COMMANDER LE GAUCHISSEMENT DE CAVITÉS D'ARTICLES IMPRIMÉS EN TROIS DIMENSIONS LORS D'UN TRAITEMENT THERMIQUE

(30) Priority: 15.10.2014 US 201462064045 P
(43) Date of publication of application: 23.08.2017
(73) Proprietor: The Exone Company, North Huntingdon, PA 15642 (US)
(72) Inventor: CLARK, Richard D., Mount Pleasant, PA 15666 (US); TUK, Douglas P., Latrobe, PA 15650 (US); PASTERIK, Thomas G., Glenshaw, PA 15116-1351 (US); CARY, Brandon, Zelienople, PA 16063 (US); LIZZI, Thomas, Harmony, PA 16037 (US)
(74) Representative: Viering, Jentschura & Partner mbB Patent- und Rechtsanwälte
(86) International application number: PCT/US2015/055644
(87) International publication number: WO 2016/061302

(56) References cited:
- EP-A1- 3 015 251
- EP-A2- 1 486 318
- WO-A1-2014/006192
- WO-A1-2016/113213
- US-A- 5 745 834
- US-A- 6 036 777
- US-A- 6 048 432
- US-A- 6 048 432
- US-A1- 2007 071 902
- US-A1- 2010 028 645
- US-A1- 2012 308 837
- US-A1- 2013 224 688
- US-A1- 2013 316 149
- US-B1- 6 508 980

## Description

### Background:

Field of the Invention: The present invention relates to methods for controlling warpage of cavities of three-dimensionally printed articles during heat treatment wherein the cavities extend inwardly from a surface of the article.

Background of the Art: One three-dimensional printing process that is particularly attractive for making complex geometry articles is the three-dimensional binder jet printing process. This process is also sometimes called the "three-dimensional inkjet printing process" because the binder jetting is done using a print head that resembles those developed for inkjet printing. For conciseness, the term "3DP BJ process" will be used hereinafter to refer to the three-dimensional printing binder jetting process, the printed article made by the 3DP BJ process will be referred to hereinafter as a "3DP BJ article", and using the 3DP BJ process to make a 3DP BJ article will be referred to hereinafter as "3DP BJ printing" the article. For example, creating a binder-bonded particle version of a rotor using the 3DP BJ process would be referred to herein as "3DP BJ printing a 3DP BJ rotor". A 3DP BJ article is in many instances heat treated to transform the 3DP BJ article into the intended article itself. This transformation is accompanied by a marked increase in strength.

For economic reasons, it is desirable to use the 3DP BJ process to make articles having one or more cavities that extend inwardly from a surface of the article. Such cavities may terminate within the article, i.e. be a blind cavity, or may extend through the article to another surface of the article and/or may join with other such cavities. In many instances, such cavities are defined by one or more walls - whether called sidewalls, roofs, or floors - which may have thicknesses which are relatively thin compared to their spans. Since the structural features of a 3DP BJ article are weak relative what they are after heat treatment, i.e. the article itself, some cavities (or equivalently, their walls) are susceptible to gravity-induced geometrical distortion during the heat treatment. Such geometrical distortion is sometimes referred to in the art as "slumping" or "slumping warpage" and will be referred to hereinafter simply as "warpage". In some instances, the occurrence of such warpage may disqualify the use of the 3DP BJ process from making an article. Accordingly, there is a need in the art to avoid such warpage from occurring.

US 2010/028645 A1 discloses adaptive supports for green state articles and methods of processing thereof. US 2013/316149 A1 discloses forming objects by infiltrating a printed matrix. EP 3 015 251 A1, which document falls under Art. 54(3) EPC and, thus, is not relevant to the question of inventive step, discloses a three-dimensional shaped body and a support formation method.

### Summary of the Invention

The present invention ameliorates the aforementioned warpage problem by providing methods for making an article having a cavity extending inwardly from an outside surface by 3DP BJ printing and subsequent heat treatment as defined in independent claim 1. According to these methods, a 3DP BJ article is 3DP BJ printed from a build powder as is a 3DP BJ object which is adapted to be contactingly insertable into the cavity of the 3DP BJ article. The term "contactingly insertable" is to be construed to mean that at least a portion of the 3DP BJ object can be inserted into the cavity of the 3DP BJ article in such a way that at least opposing portions of the outer surface of the 3DP BJ object contact at least opposing portions of the surface of the cavity in a manner which provides structural support for the higher of the contacted walls of the 3DP BJ article cavity from warpage during the heat treatment. Also according to these methods, at least a portion of the 3DP BJ article cavity surface and or at least a portion of the surface of the 3DP BJ object is coated with an interface material or a material is applied thereto to prevent the 3DP BJ object from becoming bonded to the 3DP BJ article during the heat treatment. Also according to these methods, the 3DP BJ object is contactingly inserted into the 3DP BJ article cavity and the 3DP BJ article and the 3DP BJ object are heat treated. The heat treatment transforms the 3DP BJ article into the intended article itself and the the 3DP BJ object into a heat treated 3DP BJ object. According to these methods, the heat treated 3DP BJ object subsequently is removed from the article, i.e. it is removed from the cavity of the article.

Some embodiments of the present invention also include 3DP BJ printing a body that has a surface that mates with a surface of the 3DP BJ article and then treating at least one of these mating surfaces to prevent the 3DP BJ body from bonding to the 3DP BJ article during heat treatment. In such embodiments, at least a portion of the mating surface of the 3DP BJ article is supported by a corresponding portion of the mating surface of the 3DP BJ body during the heat treatment.

### Brief Description of the Drawings

The criticality of the features and merits of the present invention will be better understood by reference to the attached drawings. It is to be understood, however, that the drawings are designed for the purpose of illustration only and not as a definition of the limits of the present invention.
FIG. 1 is a schematic perspective view of a 3DP BJ article having a cavity and two insertable objects in accordance with an embodiment.
FIG. 2 is a schematic perspective view of the article and the two insertable objects of FIG. 1 after the two insertable objects have been contactingly inserted into the cavity.
FIG. 3 is schematic perspective view of (a) another 3DP BJ article having a plurality of cavities, (b) an insertable object, and (c) two supports according to an embodiment.
FIG. 4 is a schematic side view of the 3DP BJ article of FIG. 3.
FIG. 5 is a schematic perspective view of the 3DP BJ article, the insertable object, and the supports of FIG. 3 after the insertable object has been contactingly inserted into one of the cavities of the article and the bottom surface of article has been placed in supporting contact with the top surfaces of the two supports.
FIG. 6 is a schematic perspective view of a second rectangular insertable object having a plurality of orifices which are adapted to permit the through flow of a flowable support powder.

### Description of Preferred Embodiments

In this section, some preferred embodiments of the present invention are described in detail sufficient for one skilled in the art to practice the present invention without undue experimentation. It is to be understood that whenever a range of values is described herein or in the claims that the range includes the end points and every point therebetween as if each and every such point had been expressly described. Unless otherwise stated, the word "about" as used herein and in the claims is to be construed as meaning the normal measuring and/or fabrication limitations related to the value which the word "about" modifies. Unless expressly stated otherwise, the term "embodiment" is used herein to mean an embodiment of the present invention.

It is to be understood that it is within the scope of the present invention that the embodiments of the methods described herein may be used to make a single article or to make multiple articles at the same time. However, for simplicity sake, the descriptions of the preferred embodiments below reference only the making of a single article.

It is to be understood that the reference to an article having a cavity does not restrict the present invention to use with articles having only a single cavity extending inwardly from an outside surface. The present invention embraces articles having one or more cavities and the cavities may the same as or different from each other and the cavities may interjoin. It is also to be understood that any such cavity may be a through-cavity or blind cavity.

It is to be understood that the term "powder" herein is also sometimes referred to in the art as "particulate material" or "particles" and the term "powder" is to be construed herein as meaning any such material, by whatever name, that is used in the 3DP BJ process as a layer-forming material upon which a binder is deposited for the creation of the desired article. The powder may comprise any type of material capable of taking on the powder form, e.g. metal, plastics, ceramics, carbon, graphite, composite materials, minerals, etc.

It is also to be understood that the present invention may be used with any type of article having a cavity extending inwardly from an exterior surface.

The basic 3DP BJ process was developed in the 1990's at the Massachusetts Institute of Technology and is described in several United States patents, including the following United States patents: 5,490,882 to Sachs et al., 5,490,962 to Cima et al., 5,518,680 to Cima et al., 5,660,621 to Bredt et al., 5,775,402 to Sachs et al., 5,807,437 to Sachs et al., 5,814,161 to Sachs et al., 5,851,465 to Bredt, 5,869,170 to Cima et al., 5,940,674 to Sachs et al., 6,036,777 to Sachs et al., 6,070,973 to Sachs et al., 6,109,332 to Sachs et al., 6,112,804 to Sachs et al., 6,139,574 to Vacanti et al., 6,146,567 to Sachs et al., 6,176,874 to Vacanti et al., 6,197,575 to Griffith et al., 6,280,771 to Monkhouse et al., 6,354,361 to Sachs et al., 6,397,722 to Sachs et al., 6,454,811 to Sherwood et al., 6,471,992 to Yoo et al., 6,508,980 to Sachs et al., 6,514,518 to Monkhouse et al., 6,530,958 to Cima et al., 6,596,224 to Sachs et al., 6,629,559 to Sachs et al., 6,945,638 to Teung et al., 7,077,334 to Sachs et al., 7,250,134 to Sachs et al., 7,276,252 to Payumo et al., 7,300,668 to Pryce et al., 7,815,826 to Serdy et al., 7,820,201 to Pryce et al., 7,875,290 to Payumo et al., 7,931,914 to Pryce et al., 8,088,415 to Wang et al., 8,211,226 to Bredt et al., and 8,465,777 to Wang et al.

In essence, the 3DP BJ process involves the spreading of a layer of a powder and then selectively inkjet-printing a fluid onto that layer to cause selected portions of the powder layer to bind together. This sequence is repeated for additional layers until the desired article has been constructed. The material making up the powder layer is often referred as the "build material" or the "build material powder" and the jetted fluid is often referred to as a "binder", or in some cases, an "activator". During the 3DP BJ process, the portions of the powder layers which are not bonded together with the binder form a bed of supporting powder around the article or articles which are being made, i.e. a "build material powder bed."

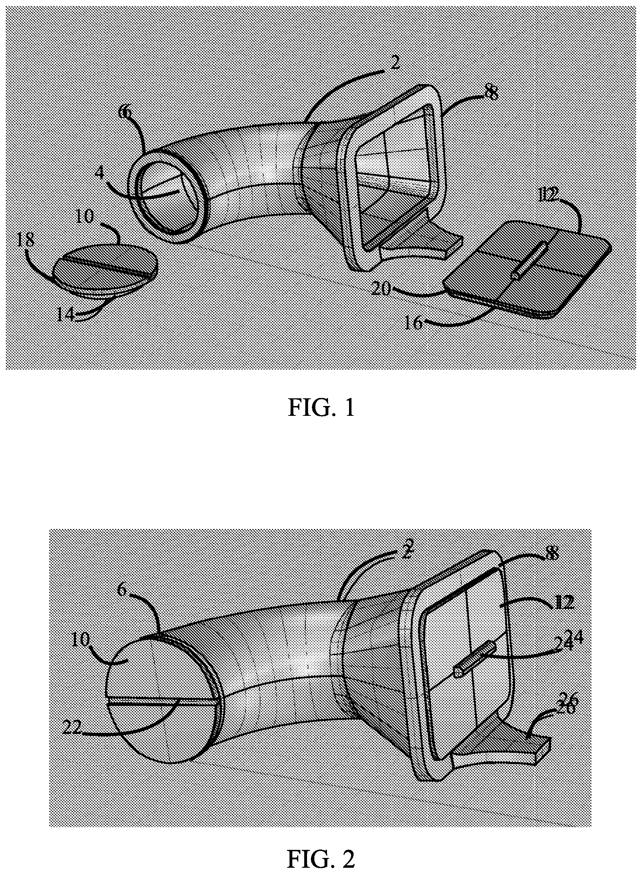

Heat treating of a 3DP BJ article is sometimes required in order to strengthen and/or densify the 3DP BJ article. Often, the first portion of the heat treatment will be to heat the 3DP BJ article while it is still supported by the powder bed in order to cure the binder. The first portion is followed by removing the 3DP BJ article from the powder bed and a second portion of the heat treatment may include heating the 3DP BJ article to temperatures sufficient to sinter together the powder of the 3DP BJ article. For example, when metal powders are used as the build material, the post-processing sometimes involves sintering the metal powder together and/or infiltrating the sintered, but porous article, with a molten metal, e.g. through infiltration stem 26 on adapter 2 (see FIG. 2).

In embodiments, a 3DP BJ article is 3DP BJ printed from a build powder as is a 3DP BJ object which is adapted to be contactingly insertable into the cavity of the 3DP BJ article. At least a portion of the 3DP BJ article cavity surface and or at least a portion of the surface of the 3DP BJ object is treated to prevent the 3DP BJ object from becoming bonded to the 3DP BJ article during the heat treatment. The 3DP BJ object is contactingly inserted into the 3DP BJ article cavity and the 3DP BJ article and the 3DP BJ object are heat treated. The 3DP BJ article is supported by a powder bed during the heat treatment. The heat treatment transforms the 3DP BJ article into the intended article itself and the the 3DP BJ object into a heat treated 3DP BJ object, which is then removed from the cavity of the article.

The advantage of the use of an inserted 3DP BJ object to provide support during heat treatment over the use a rigid insertable object is that the 3DP BJ object's surfaces move and the 3DP BJ object shrinks during the heat treatment in a manner that is very similar to that of the 3DP BJ article surfaces which it contacts and the cavity into which it is inserted. In contrast, a rigid insertable object, even if initially, intermediately, or finally fitting the cavity, would not move along with the 3DP BJ article surface in the manner that the 3DP BJ body surface does or shrink as the cavity does.

A first preferred embodiment will now be described with reference to FIGS. 1 and 2. FIG. 1 is a schematic perspective view of a 3DP BJ article, i.e. a 3DP BJ flow channel elbow adaptor **2.** The adapter **2** has a continuous cavity **4** extending inwardly from the round end **6** of the adaptor **2** and from the rectangular end **8** of the adaptor **2.** FIG. 1 also shows a perspective view of a 3DP BJ round object **10** which is adapted to be contactingly insertable into the cavity **4** at the round end **6** and a 3DP BJ rectangular object **12** which is adapted to be contactingly insertable into the cavity **4** at the rectangular end **8.** The round object **10** and the rectangular object **12** are made from the same build powder as the adapter **2.** Note that the round object **10** and the rectangular object **12** each have a necked portion, i.e. the round neck **14** and the rectangular neck **16** respectively, which are adapted to be contactingly insertable into the cavity **4** at the respective round end **6** and the rectangular end **8.** Also note that the round object 10 and the rectangular object 12 each have rim portions, i.e. the round rim 18 and the rectangular rim 20 respectively, which are adapted remain outside of the cavity 4.

FIG. 2 is a schematic perspective view of the adapter 2 after the round object 10 has been contactingly inserted into the cavity 4 (not visible) at the round end 6 and the rectangular object 12 has been contactingly inserted into the cavity 4 at the rectangular end 8. Note that the round object 10 has a groove 22 which may be used to insert a tool to aid in the placement into and/or removal of the round object 10 from the cavity 4. Likewise, rectangular object 12 has a handle 24 which may be used to aid in the placement into and/or the removal of the rectangular object 12 from the cavity 4.

It is to be understood that although the round and rectangular necks 14, 16 are shown in FIG. 1 to be insertable only a short way into the cavity 4, it is within the scope of the present invention for the portion of the object that is to be contactingly insertable into the cavity of the article to extend into the article's cavity to any desired depth to prevent warpage from occurring during heat treatment. In some instances, the geometry of the cavity will limit the depth to which an object can extend into the cavity. In any instance, the depth to which the object extends into the cavity is a matter of design choice based upon the warpage expected if the object was not used.

Prior to contactingly inserting the round and rectangular objects 10, 12 into the cavity 4, at least a portion of the surface of the cavity 4 and/or at least a portion of the surface of each of the round and the rectangular objects 10, 12 are treated to prevent the round and the rectangular objects 10, 12 from bonding to the adapter 2 during the heat treatment. In some embodiments, the treating includes coating the selected surface with an interface material, e.g. boron nitride, which prevents interdiffusion or reaction between the object and the article. In some embodiments, the treating includes applying a material, e.g. a reducing or oxidizing material, to the selected surface that will cause the surface itself to become relatively inert to interdiffusion or reaction between the object and the article. When applying an interface material that is in the form of a fine powder, e.g. boron nitride, is helpful to suspend the interface material in an evaporable liquid and then paint the suspension onto the surface that is to be coated. When such a suspension is used, it is also helpful to heat the surface to a temperature that is near or above the normal boiling point of the evaporable liquid as a caution against the liquid infiltrating into the 3DP BJ article, body, or object.

As mentioned above, the 3DP BJ article is supported by a powder bed during heat treatment. The powder bed may comprise any powder which is capable of providing support to the 3DP BJ article and which will remain flowable throughout the heat treatment so that it can be removed from the article after heat treatment has been completed. It is preferable that the powder bed powder does not react with the 3DP BJ article during the heat treatment, although a small amount of reaction may be tolerable in some instances, especially on surfaces of the article which are to be subsequently sand blasted, machined, abrasion cleaned, and/or chemically cleaned. When the heat treatment includes an initial stage of curing the binder, the powder bed is preferably the build material powder bed and the cured 3DP BJ article is removed from the build material powder bed afterward for further heat treatment in another power bed.

The powder bed preferably fills cavities of the 3DP BJ article, including the cavity into which an insertable object is inserted. In some embodiments, it is preferred to provide a reservoir of powder above an entrance to a cavity so that the support powder can flow into the cavity during any settling that may occur during the heat treatment. In embodiments in which all of the ends of a cavity are closed off, e.g. as shown in the embodiment in FIG. 2, it is preferred that the support powder loosely fill the cavity since a dense packing of the enclosed support powder may undesirably restrict the shrinkage of the cavity during the heat treatment.

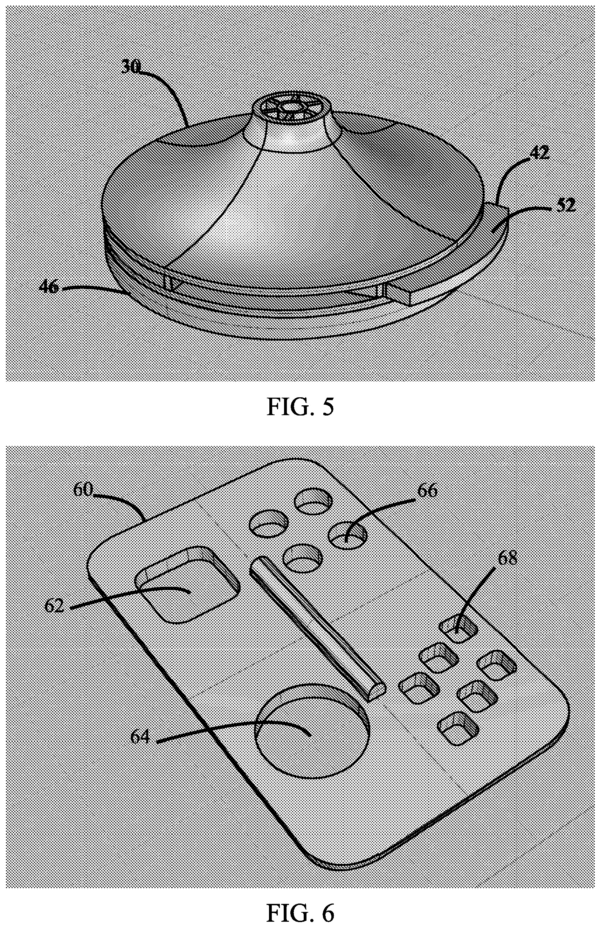

It is also within the scope of the present invention to provide one or more orifices in the insertable objects to allow for flow of the support powder therethrough. Such orifices are to be dimensioned and located so that they do not compromise the supporting function of the insertable object which is necessary for cavity warpage control. Referring to FIG. 6, there is shown a 3DP BJ second rectangular object **60** which is designed to be a replacement for the rectangular object **12** that is shown in FIGS. 1 and 2. The second rectangular object **60** has a plurality of orifices, e.g. orifices **62, 64, 66, 68,** which are adapted to permit support powder through the second rectangular object **60** after it has been inserted into cavity **4** (refer to FIG. 1) while not compromising the support function of the second rectangular object **60.**

In some embodiments, the resistance to warpage is improved upon by supporting one or more exterior surfaces of the 3DP BJ article with the mating surface or mating surfaces of one or more 3DP bodies. Such embodiments include 3DP BJ printing a body that has a surface that mates with a surface of the 3DP BJ article and then treating at least one of these mating surfaces to prevent the 3DP BJ body from bonding to the 3DP BJ article during heat treatment. During the heat treatment of the 3DP BJ article, at least a portion of the mating surface of the 3DP BJ article is supported by a corresponding portion of the mating surface of the 3DP BJ body. This manner of supporting the 3DP BJ article surface on a mating 3DP BJ body surface provides more rigid support to the 3DP BJ article than can be provided by a flowable powder bed. The advantage of this manner of support over providing support on a rigid surface is that the 3DP BJ body surface moves during the heat treatment in a manner that is very similar to that of the mating 3DP BJ article whereas a rigid surface, even if initially, intermediately, or finally matching, would not move along with the 3DP BJ article surface in the heat treatment compensating manner that the 3DP BJ body surface does.

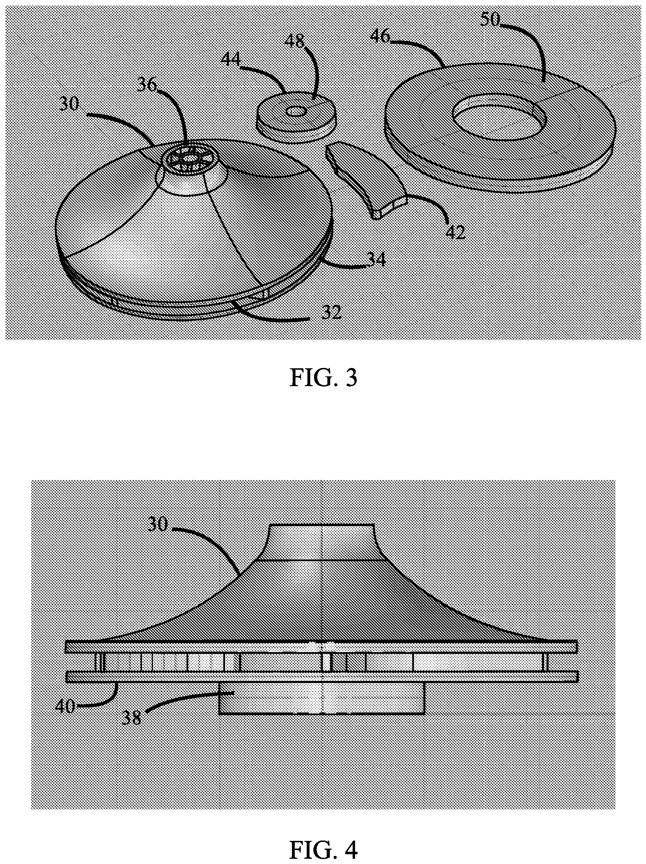

An example of such an embodiment will now be described. FIGS. 3 and 4, respectively, are schematic perspective and side views of another 3DP BJ article, i.e. a 3DP BJ enclosed vane rotor **30.** The rotor **30** has a plurality of vane cavities, e.g. vane cavity **32,** which extends inwardly from the radial peripheral surface **34** of the rotor **30.** Each of vane cavities extends through the rotor **30** to the open top end **36** of the rotor **30.** The rotor **30** also has a hollow collar **38,** which extends downwardly from the bottom surface **40** of the rotor **30** so that a portion of the bottom surface **40** is enclosed by the collar **38.**

FIG. 3, in addition to showing the rotor **30,** shows a 3DP BJ insertable object **42,** which is contactingly insertable into the vane cavity 32, a 3DP BJ center support **44,** and a 3DP BJ bottom support **46,** all of which are made from the same build powder as the rotor **30.** For simplicity, only one 3DP BJ insertable object **42** is shown, but similar insertable objects may be provided for each of the other vane cavities of the vane **30.**

The top surfaces **48, 50** of the center support **44** and the bottom support, respectively, are adapted to mate with the respective areas of the bottom surface **40** of the rotor **30** which they are adapted to support during at least a part of the heat treatment of the rotor **30.** Referring now to FIG. 5, there is shown a schematic perspective view of the rotor **30.** The insertable object **42** has been contactingly inserted into the vane cavity **32** (not visible due to the insertion of insertable object **42** thereinto) and the center support **44** (not visible) and the bottom support **46** have been put into place under the rotor **30** with their respective top surfaces **48, 50** (not visible) in supporting contact with the bottom surface **40** (not visible) of the rotor **30.** A handle portion **52** of the insertable **42** object extends out of the rotor **30** to aid in the placement of the insertable object **42** in and its withdrawal from the rotor **30.** The rotor **30** is supported on its bottom surface **40** (not visible) by the top surfaces **48, 50** (not visible), respectively, of the center support **44** (not visible) and the bottom support **46.** The center support **44** (not visible) is located within the collar **38** (not visible).

## Claims

1. A method for making an article having a cavity extending inwardly from an outside surface, the method comprising the steps of:
a) three-dimensional binder jet printing a three-dimensional binder jet article from a build material, wherein the three-dimensional binder jet article is a three-dimensional binder jet version of the article;
b) three-dimensional binder jet printing from the build material a three-dimensional binder jet object which is adapted to be contactingly insertable into the cavity of the three-dimensional binder jet article, contactingly insertable meaning that at least a portion of the three-dimensional binder jet object can be inserted into the cavity of the three-dimensional binder jet article in such a way that at least opposing portions of an outer surface of the three-dimensional binder jet object contact at least opposing portions of a surface of the cavity in a manner which provides structural support for higher of contacted walls of the three-dimensional binder jet article cavity from warpage during heat treatment;
c) coating with an interface material or applying a material to at least one of at least a portion of the surface of the cavity and at least a portion of the surface of the three-dimensional binder jet object to prevent the three-dimensional binder jet object from becoming bonded to the three-dimensional binder jet article during step (e) hereof;
d) contactingly inserting the three-dimensional binder jet object into the three-dimensional binder jet article cavity;
e) heat treating the three-dimensional binder jet article and three-dimensional binder jet object to transform the three-dimensional binder jet article and the three-dimensional binder jet object into, respectively, the article and a heat treated three-dimensional binder jet object; and
f) removing the heat treated three-dimensional binder jet object from the article.

2. The method of claim 1, wherein the build material is a metal powder.

3. The method of claim 1, wherein the build material is a ceramic powder.

4. The method of claim 1, wherein the build material comprises at least one selected from the group of a carbon powder and a graphite powder.

5. The method of claim 1, wherein the step of heat treating includes sintering the three-dimensional binder jet article.

6. The method of claim 1, wherein the step of heat treating includes infiltrating the three-dimensional binder jet article with a solidifiable liquid material.

7. The method of claim 6, wherein the solidfiable liquid material is solid at normal use temperatures of the article.

8. The method of claim 1, wherein step (c) hereof includes coating the three-dimensional binder jet object with a coating material, the coating material being adapted to prevent the three-dimensional binder jet object from becoming bonded to the three-dimensional binder jet article during step (e) hereof.

9. The method of claim 8, wherein the coating material comprises boron nitride.

10. The method of claim 1, wherein the article is an enclosed vane rotor.

11. The method of claim 1, further comprising the steps of:
(g) three-dimensional binder jet printing from the build material a three-dimensional binder jet body having a first surface which is adapted to mate with a first surface of the three-dimensional binder jet article;
(h) treating at least one of the respective first surfaces of the three-dimensional binder jet body and the three-dimensional binder jet article to prevent the three-dimensional binder jet body from becoming bonded to the three-dimensional binder jet article during step (e) hereof; and
(i) at least partially supporting the first surface of three-dimensional binder jet article upon the first surface of the body during step (e) hereof.

12. The method of claim 11, wherein step (h) hereof includes coating the three-dimensional binder jet body with a coating material, the coating material being adapted to prevent the three-dimensional binder jet body from becoming bonded to the three-dimensional binder jet article during step (e) hereof.

13. The method of claim 1, wherein the three-dimensional binder jet object has a handle portion which extends outside of the three-dimensional binder jet article cavity when the three-dimensional binder jet object has been inserted into the three-dimensional binder jet article cavity.

14. The method of claim 1, further comprising supporting the three-dimensional binder jet article in a powder bed during step (e) hereof, wherein the powder bed comprises a flowable powder and the three-dimensional binder jet object has an orifice adapted to permit flow of the powder through the three-dimensional binder jet object.

## Patentansprüche

1. Verfahren zum Herstellen eines Artikels, der einen Hohlraum hat, der sich von einer äußeren Fläche nach innen erstreckt, wobei das Verfahren die folgenden Schritte aufweist:
a) dreidimensionales Binder-Jet-Drucken eines dreidimensionalen Binder-Jet-Artikels aus einem Baumaterial, wobei der dreidimensionale Binder-Jet-Artikel eine dreidimensionale Binder-Jet-Version des Artikels ist,
b) dreidimensionales Binder-Jet-Drucken aus dem Baumaterial eines dreidimensionalen Binder-Jet-Objekts, das angepasst ist, um in den Hohlraum des dreidimensionalen Binder-Jet-Artikels kontaktierend einsetzbar zu sein, wobei kontaktierend einsetzbar bedeutet, dass mindestens ein Abschnitt des dreidimensionalen Binder-Jet-Objekts in den Hohlraum des dreidimensionalen Binder-Jet-Artikels in einer derartigen Weise eingesetzt werden kann, dass zumindest gegenüberliegende Abschnitte einer äußeren Fläche des dreidimensionalen Binder-Jet-Objekts zumindest gegenüberliegende Abschnitte einer Fläche des Hohlraums in einer Weise kontaktieren, die eine strukturelle Unterstützung für höhere von kontaktierten Wänden des Hohlraums des dreidimensionalen Binder-Jet-Artikels gegen Verzug/Verformung während der Wärmebehandlung bereitstellt,
c) Beschichten mit einem Grenzflächenmaterial oder Aufbringen eines Materials auf mindestens einen von mindestens einem Abschnitt der Fläche des Hohlraums und mindestens einem Abschnitt der Fläche des dreidimensionalen Binder-Jet-Objekts, um zu verhindern, dass das dreidimensionale Binder-Jet-Objekt während des Schritts (e) hiervon mit dem dreidimensionalen Binder-Jet-Artikel verbunden wird,
d) kontaktierendes Einsetzen des dreidimensionalen Binder-Jet-Objekts in den Hohlraum des dreidimensionalen Binder-Jet-Artikels,
e) Wärmebehandeln des dreidimensionalen Binder-Jet-Artikels und des dreidimensionalen Binder-Jet-Objekts, um den dreidimensionalen Binder-Jet-Artikel und das dreidimensionale Binder-Jet-Objekt in den Artikel bzw. ein wärmebehandeltes dreidimensionales Binder-Jet-Objekt umzuwandeln, und
f) Entfernen des wärmebehandelten dreidimensionalen Binder-Jet-Objekts von dem Artikel.

2. Verfahren gemäß Anspruch 1, wobei das Baumaterial ein Metallpulver ist.

3. Verfahren gemäß Anspruch 1, wobei das Baumaterial ein Keramikpulver ist.

4. Verfahren gemäß Anspruch 1, wobei das Baumaterial mindestens eines aufweist, das aus der Gruppe von einem Kohlenstoffpulver und einem Graphitpulver ausgewählt ist.

5. Verfahren gemäß Anspruch 1, wobei der Schritt des Wärmebehandelns das Sintern des dreidimensionalen Binder-Jet-Artikels aufweist.

6. Verfahren gemäß Anspruch 1, wobei der Schritt des Wärmebehandelns das Infiltrieren des dreidimensionalen Binder-Jet-Artikels mit einem verfestigbaren flüssigen Material aufweist.

7. Verfahren gemäß Anspruch 6, wobei das verfestigbare flüssige Material bei normalen Gebrauchstemperaturen des Artikels fest ist.

8. Verfahren gemäß Anspruch 1, wobei Schritt (c) hiervon das Beschichten des dreidimensionalen Binder-Jet-Objekts mit einem Beschichtungsmaterial aufweist, wobei das Beschichtungsmaterial angepasst ist, um zu verhindern, dass das dreidimensionale Binder-Jet-Objekt während des Schrittes (e) hiervon mit dem dreidimensionalen Binder-Jet-Artikel verbunden wird.

9. Verfahren gemäß Anspruch 8, wobei das Beschichtungsmaterial Bornitrid aufweist.

10. Verfahren gemäß Anspruch 1, wobei der Artikel ein umschlossener Flügelrotor ist.

11. Verfahren gemäß Anspruch 1, ferner aufweisend die folgenden Schritte:
(g) dreidimensionales Binder-Jet-Drucken aus dem Baumaterial eines dreidimensionalen Binder-Jet-Körpers, der eine erste Fläche hat, die angepasst ist, um zu einer ersten Fläche des dreidimensionalen Binder-Jet-Artikels zu passen,
(h) Behandeln von mindestens einer der jeweiligen ersten Flächen des dreidimensionalen Binder-Jet-Körpers und des dreidimensionalen Binder-Jet-Artikels, um zu verhindern, dass der dreidimensionale Binder-Jet-Körper während des Schritts (e) hiervon mit dem dreidimensionalen Binder-Jet-Artikel verbunden wird, und
(i) zumindest teilweises Abstützen der ersten Fläche des dreidimensionalen Binder-Jet-Artikels auf der ersten Fläche des Körpers während des Schrittes (e) hiervon.

12. Verfahren gemäß Anspruch 11, wobei Schritt (h) hiervon das Beschichten des dreidimensionalen Binder-Jet-Körpers mit einem Beschichtungsmaterial aufweist, wobei das Beschichtungsmaterial angepasst ist, um zu verhindern, dass der dreidimensionale Binder-Jet-Körper während des Schrittes (e) hiervon mit dem dreidimensionalen Binder-Jet-Artikel verbunden wird.

13. Verfahren gemäß Anspruch 1, wobei das dreidimensionale Binder-Jet-Objekt einen Griffabschnitt aufweist, der sich außerhalb des Hohlraumes des dreidimensionalen Binder-Jet-Artikels erstreckt, wenn das dreidimensionale Binder-Jet-Objekt in den Hohlraum des dreidimensionalen Binder-Jet-Artikels eingesetzt wurde.

14. Verfahren gemäß Anspruch 1, ferner aufweisend das Abstützen des dreidimensionalen Binder-Jet-Artikels in einem Pulverbett während des Schrittes (e) hiervon, wobei das Pulverbett ein fließfähiges Pulver aufweist und das dreidimensionale Binder-Jet-Objekt eine Öffnung hat, die angepasst ist, um ein Fließen des Pulvers durch das dreidimensionale Binder-Jet-Objekt zu ermöglichen.

## Revendications

1. Procédé de fabrication d'un article ayant une cavité s'étendant vers l'intérieur à partir d'une surface extérieure, le procédé comprenant les étapes suivantes :
a) l'impression à jet de liant tridimensionnelle d'un article à jet de liant tridimensionnel à partir d'un matériau de construction, l'article à jet de liant tridimensionnel étant une version à jet de liant tridimensionnelle de l'article ;
b) l'impression à jet de liant tridimensionnelle à partir du matériau de construction d'un objet à jet de liant tridimensionnel conçu pour être insérable par contact dans la cavité de l'article à jet de liant tridimensionnel, insérable par contact signifiant qu'au moins une partie de l'objet à jet de liant tridimensionnel peut être insérée dans la cavité de l'article à jet de liant tridimensionnel de telle sorte qu'au moins des parties opposées d'une surface extérieure de l'objet à jet de liant tridimensionnel entrent en contact avec au moins des parties opposées d'une surface de la cavité de manière à fournir un soutien structurel pour que les parois plus élevées parmi des parois contactées de la cavité de l'article à jet de liant tridimensionnel ne se déforment pas au cours du traitement thermique ;
c) le revêtement avec un matériau d'interface ou l'application d'un matériau sur au moins l'une parmi au moins une partie de la surface de la cavité et au moins une partie de la surface de l'objet à jet de liant tridimensionnel pour empêcher l'objet à jet de liant tridimensionnel d'être lié à l'article à jet de liant tridimensionnel au cours de l'étape (e) ci-dessous ;
d) l'insertion par contact de l'objet à jet de liant tridimensionnel dans la cavité de l'article à jet de liant tridimensionnel ;
e) le traitement thermique de l'article à jet de liant tridimensionnel et de l'objet à jet de liant tridimensionnel pour transformer l'article à jet de liant tridimensionnel et l'objet à jet de liant tridimensionnel en, respectivement, l'article et un objet à jet de liant tridimensionnel traité thermiquement ; et
f) l'extraction de l'objet à jet de liant tridimensionnel traité thermiquement de l'article.

2. Procédé selon la revendication 1, dans lequel le matériau de construction est une poudre métallique.

3. Procédé selon la revendication 1, dans lequel le matériau de construction est une poudre de céramique.

4. Procédé selon la revendication 1, dans lequel le matériau de construction comprend au moins un choisi dans le groupe d'une poudre de carbone et d'une poudre de graphite.

5. Procédé selon la revendication 1, dans lequel l'étape de traitement thermique comprend le frittage de l'article à jet de liant tridimensionnel.

6. Procédé selon la revendication 1, dans lequel l'étape de traitement thermique comprend l'infiltration de l'article à jet de liant tridimensionnel avec un matériau liquide solidifiable.

7. Procédé selon la revendication 6, dans lequel le matériau liquide solidifiable est solide aux températures normales d'utilisation de l'article.

8. Procédé selon la revendication 1, dans lequel l'étape (c) de la présente comprend le revêtement de l'objet à jet de liant tridimensionnel avec un matériau de revêtement, le matériau de revêtement étant adapté pour empêcher l'objet à jet de liant tridimensionnel de devenir lié à l'article à jet de liant tridimensionnel au cours de l'étape (e) de la présente.

9. Procédé selon la revendication 8, dans lequel le matériau de revêtement comprend du nitrure de bore.

10. Procédé selon la revendication 1, dans lequel l'article est un rotor à palettes enfermé.

11. Procédé selon la revendication 1, comprenant en outre les étapes suivantes :
(g) l'impression à jet de liant tridimensionnelle à partir du matériau de construction d'un corps à jet de liant tridimensionnel ayant une première surface adaptée pour s'accoupler à une première surface de l'article à jet de liant tridimensionnel ;
(h) le traitement d'au moins l'une des premières surfaces respectives du corps à jet de liant tridimensionnel et de l'article à jet de liant tridimensionnel pour empêcher le corps à jet de liant tridimensionnel de devenir lié à l'article à jet de liant tridimensionnel au cours de l'étape (e) de la présente ; et
(i) le soutien au moins partiel de la première surface de l'article à jet de liant tridimensionnel sur la première surface du corps au cours de l'étape e) de la présente.

12. Procédé selon la revendication 11, dans lequel l'étape (h) de la présente comprend le revêtement du corps à jet de liant tridimensionnel avec un matériau de revêtement, le matériau de revêtement étant adapté pour empêcher le corps à jet de liant tridimensionnel d'être lié à l'article à jet de liant tridimensionnel au cours de l'étape (e) de la présente.

13. Procédé selon la revendication 1, dans lequel l'objet à jet de liant tridimensionnel a une partie de poignée qui s'étend à l'extérieur de la cavité de l'article à jet de liant tridimensionnel lorsque l'objet à jet de liant tridimensionnel a été inséré dans la cavité de l'article à jet de liant tridimensionnel.

14. Procédé selon la revendication 1, comprenant en outre le support de l'article à jet de liant tridimensionnel dans un lit de poudre pendant l'étape (e) de la présente, dans lequel le lit de poudre comprend une poudre qui peut s'écouler et l'objet à jet de liant tridimensionnel a un orifice adapté pour permettre l'écoulement de la poudre à travers l'objet à jet de liant tridimensionnel.
